# EUROPEAN PATENT APPLICATION

(11) **EP 4 617 389 A1**
(43) Date of publication of application: **17.09.2025**
(21) Application number: 24386128.3
(22) Date of filing: 12.11.2024
(51) Int. Cl.: C22B 7/00, C22B 15/00

(54) **HYDROMETALLURGICAL METHOD OF PRODUCTION - RECOVERY OF COPPER FROM COPPER OIL SLUDGE, USING NEW, ORGANIC AND INORGANIC, SYNTHETIC AQUEOUS SOLUTIONS AND GEOPOLYMER MATERIALS**

(30) Priority: 15.03.2024 GR 20240100196
(71) Applicant: Argyropoulos, Sokratis, 54630 Thessaloniki (GR)
(72) Inventor: Argyropoulos, Sokratis, 54630 Thessaloniki (GR)

(57) **Abstract**

A Method is provided for the hydrometallurgical production of Copper from Copper Oil Sludge and other similar type secondary concentrates - residues of production processes, with high concentrations of Copper.

By applying the proposed method, the hydrometallurgical production of Copper is possible efficiently, from the specific raw material, which comes from the Copper extrusion process for the production of cables and wires.

The method enables the hydrometallurgical extraction - production of Copper from the specific residue, using new chemical solutions and geopolymer materials, and a processing line. These materials, until now, could not be efficiently processed and remained unused, due to physicochemical characteristics and of organic inhibitors, which made the Copper, until now, unrecoverable, from the specific waste.

## Description

### Technical field

The present invention relates to the hydrometallurgical production of Copper from Copper Oil Sludge and other similar secondary concentrates - residues of production processes, with high concentrations of Copper, that they are produced from Copper processors. By applying the proposed method, the hydrometallurgical production of Copper is possible efficiently, from the specific raw material, which comes from the Copper extrusion operations, for the production of cables, pipes and wires.

### Existing state of the art

### Copper production - recovery method

Exploitation of copper-poor ore, mainly oxides, is done by the Leaching method, which is a pre-stage of hydrometallurgy. This enrichment method is based on the dissolution and extraction of copper from the ore usually using acids (e.g. dilute H₂SO₄). Alternatively, it is also called biochemical extraction or leaching. This type of enrichment belongs to hydro-metallurgy.

Hydro-metallurgy is the branch of extractive metallurgy that deals with the production (extraction) of metals, alloys or pure chemical compounds of metallic elements from minerals or other raw materials, using aqueous solutions at relatively low temperatures. The metal or alloy or chemical compound is usually recovered by electrolysis or by precipitation into the solution. Hydro-metallurgical processes are used not only for the production of non-ferrous metals such as copper but also metals such as nickel, cobalt, lead, gold and silver. In some cases, hydro-metallurgical processes are used in combination with pyro-metallurgical, as in the case of aluminum or zinc.

Specifically, for copper, the first application of hydro-metallurgy on an industrial scale took place in the mid-18th century in Spain for the exploitation of copper ores near the Rio Tido ("Red River"). Already during the Renaissance, the miners of Rio Tito had noticed that when they left the sulphide copper-ores they mined in the area for a long time exposed to the air, then from the rainwater, "vitriol" was created near the piles of copper-ores. That is, a solution of sulfuric acid (H₂SO₄), ferrous sulfate (FeSO₄), and copper sulfate (CuSO₄), that it had been created. The Spanish miners began to systematically produce metallic copper, from "vitriol", with the addition of metallic iron. The chemical reaction described above is as follows:

**Fe°(s) + CuSO₄(aq) → Cu°(s) + FeSO₄(aq).**

Today, the procedure followed for the recovery of copper with this particular method is as follows:
1. First, the copper ore is sprayed with sulfuric acid. The sulfuric acid is adsorbed and passes through the pile and dissolves the copper.
2. Then the metal bearing solution is collected in a tank.
3. The solution is transferred to a facility to extract the organic solvent where after reaction complexes are formed, dissolved in an organic phase.
4. The copper-saturated organic phase continues to the release facility, where it is contacted with the organic acid solvent which re-extracts the copper into the aqueous phase resulting in a concentrated and clear solution. The organic solvent is regenerated and returned to the 3rd stage.
5. The electrolyte is pumped into electrorecovery cells, at the cathodes where the copper is deposited with a purity of 99.9%. The acid produced is returned to the sterile electrolyte in stage 4.

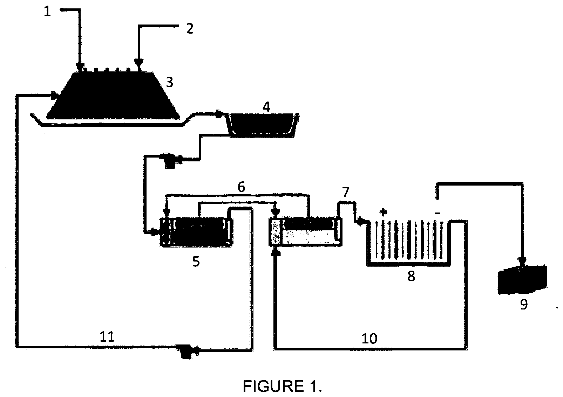

Figure 1 shows the flow diagram of the hydrometallurgical process for the production of Copper. More specifically, the extraction pile (3) is first created, where there is the ore (1) to which sulfuric acid (2) is added. The resulting solution is initially stored in the metal bearing solution tank (4). The solution is then led to the organic solvent solution cleaning tank (5), where organic solvent (6) is added. The resulting acid solution, which is poor in CuSO₄, is recirculated to the extraction pile. The process produces CuSO₄ electrolyte, which is taken to the electrolysis stage (8). At this stage pure copper is produced in the form of cathodes (9). The CuSO₄-poor electrolyte solution is recirculated to the solvent tank.

### Advantages of invention

1. Production - recovery of metal, from materials from which conventional methods cannot extract Copper, due to the physicochemical characteristics and organic inhibitors.
2. Production - recovery of metal, from materials from which conventional methods cannot extract Copper, due to the chemical bonds and organic compounds, in which the metals are found and make them unrecoverable.
3. The produced metal has a high degree of purity that exceeds the average degree of purity achieved by existing technologies.
4. The recovery rate of Copper exceeds 95%, even if the concentration of the organic inhibitor in the waste is very high.
5. The energy consumption of the proposed production line is low compared to pyrometallurgical processing methods.
6. The circular economy and the saving of primary mineral resources are promoted, through the capture of metals at a rate of more than 95%.

### Disclosure of invention

The proposed Copper production application has the following stages:
1. Pretreatment - neutralization - preparation of incoming materials
2. Metal separation stage - chemical etching
3. Metal production stage - mixing and chemical flotation
4. Copper production stage - chemical crystallization
5. Copper production stage - Chemical precipitation

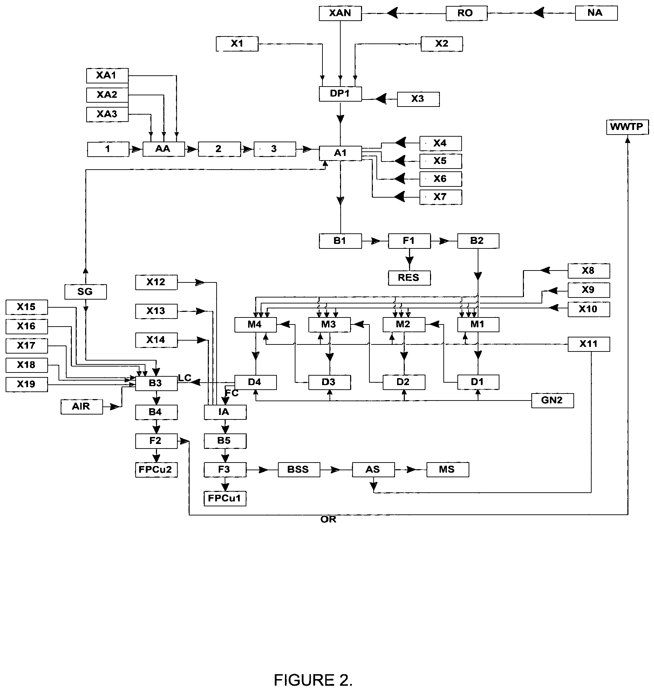

Figure 2 shows the process flow diagram of Copper production from Copper Oil Sludge.

### Pretreatment of incoming materials

The feed of the processing line, with material, to be processed, will be carried out by a loader, which will feed the material into a hopper (1). From the receiving hopper, the material, will initially be fed, by belt conveyor, to a neutralization reactor (AA), closed type. The reactor will consist of a closed type treatment vessel, which will have a horizontal stirring and mixing axis, with suitable stirring devices, so that the material can be homogenized efficiently in a short period of time. Upon completion of feeding the neutralization reactor, there is continuous stirring and feeding of three consumables:
A Geopolymer material (XA1), in powder form, consisting of Zeolite (30,00%), Huntite (5,00%), Calcium Carbonate (35,00%), Bentonite (20,00%), Kaolin (7,00%), Potassium Hydroxide (2,00%) and Sodium Hydroxide (1,00%), Iron Trichloride (XA2), in liquid form, which is added to the reactor, with a proper dosometric pump and Hydrogen Peroxide (H₂O₂) (XA3), which is also in in liquid form and is added to the reactor with a proper dosometric pump.

Processing the material takes approximately time t = 40.00 minutes. At the end of the process, the reactor empties its contents, through special hatches, which are in its lower part, on a closed conveyor belt. The conveyor belt feeds the treated material into a feeding hopper, which will be, in its lower part, equipped with a mechanism for "breaking" aggregates (jaw crusher). The crusher is placed, to reduce the size of the incoming materials, to a particle size of less than 30.00 mm. The material leaving the neutralization reactor will be a homogenized material, which will have a moisture content of approximately 70.00% and will have large and small aggregates (pieces), for this reason it is necessary before it reaches the next processing stage to undergo a mechanical process of reducing its size.

By feeding the hopper, the material will be guided, using a conveyor belt, to a belt scale, to weigh the incoming material, and will be fed to a delumber hopper. The delumber is a type of crusher, and after this it will be fed to a ball mill (2), to reduce the size to the desired size. The desired particle size value is 50 µm. In order to achieve this granulometry in this particular machine, water will be added in a ratio of approximately 50% - 50% with the incoming material. The use of water is due to the very small particle size (≤ 50µm), where only through the use of water, the material can be transferred to the next stage. The water, along with the material, exits the outlet end of the ball mill and ends up in a separation screw. The special construction of the screw allows the separation of particles with a dimension > 50µm from those with a dimension ≤ 50µm, as a result of which the particles with a dimension > 50µm return to the entrance of the ball mill, while those with a dimension ≤ 50µm, together with the water, end up in a small tank of suitable capacity and from there with a pump are to be led to the gyroscopic sieve of suitable capacity (3).

In the gyroscopic sieve (3), a mechanical size separation of the incoming material will take place, so that the particles with a diameter ≤ 50µm continue to the next stage. The larger diameter material will exit the screen and end up on the separation screw to return back to the ball mill inlet to pass through it again. The material of suitable diameter, together with the water, will pass through the sieve and will be concentrated in a small tank of suitable capacity, from where it will be initially fed to a collection tank (buffer). From the collection tank, in which there will be agitation so that the solids continue to remain in suspension, the liquid will be fed to the separation reactor (A1), using a transfer pump.

### Metal separation stage - chemical etching

The stage of metal separation and chemical etching is carried out in a suitable reactor (A1). The operating cycle of the reactor (A1) is as follows: transfer and filling of the water-raw material solution, from the collection tank (buffer), at the same time filling with a mixture of water and chemicals, from the chemical preparation tank (DP1), and then filling of the reactor with tap water (X4), until the total volume of the mixture of water - raw material - chemicals, inside the reactor (A1), reaches the desired capacity, treatment process of the solution, discharge of the reactor to the collection tank (B1). Upon completion of each processing cycle, the same processing cycle begins again. The reactor is fed in each operating cycle, with a ratio of material/water-chemicals 1:10. The mixture of chemicals is prepared for each operating cycle, in a chemical preparation vessel (DP1).

In more detail, the processing process in each operating cycle at this stage is as follows:
Initially, the filling of the reactor (A1) with the chemicals begins. Chemicals are prepared in a specific proportion, in the chemical preparation tank (DP1). The preparation of the liquid treatment solution (Activated Dissolver) is carried out in the chemical preparation tank (DP1). Upon completion of the preparation of this solution, it is pumped into the reactor (A1). In the tank (DP1), the following chemicals are supplied, for the preparation of the treatment solution (Activated Dissolver), in appropriate proportions: aqueous solution of NH₃ < 25% (X1), (NH₄)₂CO₃, in powder form (X2), (NHₐ)²SO₄, in powder form (X3) and deionized water (XAN). The deionized water for the reactor (A1) is produced by a reverse osmosis (RO) system, using tap water (NA). Upon completion of the supply of chemicals and tap water (X4), filling in the reactor (A1), stirring begins, as well as the addition of the material to be treated. Upon completion of the filling of the reactor, the main stage of treatment - chemical etching begins, which requires a total of 6.00 hours. During this stage, the following chemicals are added to the reactor: NaOH 50% (X5), Sodium Aluminate (X6) και Metasulfonic Acid (X7). The whole process takes place in pH 12.5. Sodium Aluminate (X6) and NaOH 50% (X5), are added in order to maintain pH value to the desirable value, during process, but also for the removal of the contaminants.

During the process time there is heating of the reactor, so that they maintain a specific temperature of fifty degrees Celsius (50°C), during processing. The reactors are heated by a suitable steam distribution system, which will be produced by a steam boiler (SG). At the completion of the treatment time, the content of the reactor is emptied into a buffer tank (B1), in which there is agitation and is in a state of readiness for the start of the next treatment cycle. In each processing cycle, the reactor (A1) is fed with the water - raw material solution from the buffer collection tank, with the water - chemical solution from the chemical preparation tank (DP1), tap water (X4) and discharges into a buffer tank ( B1).

The aqueous etching solution, from the reactor (A1), after completing its treatment, will be transferred to the buffer tank (B1). From the buffer tank (B1), the solution will be fed, using a suitable pump to the filter press (F1), of suitable capacity, in order to separate the liquid from the solid phase of the solution.

From the dehydration in the filter press (F1), two products will come: the solid residue (RES), which is sent to management (for disposal or for second pass treatment) and the liquid, where the separated metals are and which will be stored in the buffer tank (B2) of washing liquid, of suitable capacity, for controlled feeding in the next treatment stage. The drainage from the filter press (F1) will initially be collected in a transfer buffer tank of suitable volume and from there by pump it will be sent to the buffer tank (B2). The reactor system (A1) will be of closed type. It will have vents of the appropriate type, so that in case there is an increase in pressure inside the container, it can be relieved from a specific point. At each relief point of the reactor (A1), there will be a gas inlet and a collection network, which will end in a gas decontamination system, which will consist of one (1) liquid scrubber and one (1) activated carbon filter, in series, so that there is a complete treatment of the gaseous stream before it is discharged into the atmosphere.

### Metal production stage - mixing and chemical flotation

From the buffer tank (B2), the solution is fed, with a constant flow, to a group of reactors, of a suitable volume, using a pump. These reactors are connected to each other in series and the liquid supplied passes through all of them, until its final exit from them. In this arrangement there are four mixing containers (M1, M2, M3, M4) and four separation containers (D1, D2, D3, D4). The liquid first enters the container (M1) and is transferred to the other containers in the following order: M1, D1, M2, D2, M3, D3, M4, D4. From the mixing containers to the separation containers, the liquid will be transferred using a transfer pump. Mixing containers M1, M2, M3 and M4 are stirred and the following chemicals are added: Methyl isobutyl carbinol (X8), Ethanol (X9), SDS (X10) and Sodium Dimethyl Dithiocarbonate (SDD) (X11).

In the separation vessels D1, D2, D3 and D4, flotation is carried out by adding nitrogen, through a nitrogen generator (GN2), of suitable nitrogen supply capacity, to all four vessels at the same time, to produce foam, which overflows into each vessel and collected separately. From the separation vessels D1, D2, D3, and D4, the floatings in each vessel will overflow to the Ion Reactor (IA), while the liquid exits from the separation vessel D4, to the buffer tank (B3). In the Ionic Reactor (IA), the stream from which the Copper will be produced through flotation, is collected, while in the buffer tank (B3), the stream from which the Copper will be produced through sedimentation is collected. As an option, in the separation containers D1, D2, D3 and D4, there is the possibility to pass in addition to Nitrogen and atmospheric air (AIR). The use of atmospheric air (AIR) for flotation in this stage results in the production of CuO, during flotation, which is fed to the Ion Reactor (IA).

### Copper production stream through chemical crystallization

The Ion Reactor (IA), in which the foam - floatings from the previous stage are fed is filled with Methanol (X12). During the foam inlet, a NaOH 50% (X13) solution is added, in order the pH value to the ionic reactor to maintain on 11,50, and also EDTA (X14) is added. The ionic reactor will accept the foam until the pH value will be stabilized on 11,50 and there will be no need for further pH adjustment by using NaOH 50% (X13) solution.

Once the pH has been stabilized in the ionic reactor I(A), the liquid is transferred to the Buffer Tank (B5), of suitable capacity, using a transfer pump and from there using a suitable pump it is fed to the Filter Press (F3). During the dehydration process, the solid final copper product (FPCu1), (Cu(OH)₂/CuO) is obtained, which is collected in bins and the liquid leachate, which is sent to a buffer tank (BSS). The produced copper product (FPCu1) is in solid form, after dehydration, of cake type, with a percentage of moisture.

The liquid leachate from the buffer tank (BSS) is pumped to a distillation column (AS) to recover Methanol (X12), EDTA (X14) and SDS (X10). Methanol (X12), which is recovered from the distillation column, is collected in a tank (MS) and from there by pump it is sent to the Methanol storage tank. SDS (X10) and EDTA (X14), recovered from the bottom of the distillation column, are periodically collected and transferred to the SDS storage vessel for reuse.

### Copper production stream through chemical precipitation

In the buffer tank (B3), where the liquid from the previous stage is collected. Five consumables are also added: Sodium dimethyldithiocarbumate (X15), Methyl Isobutyl Carbinol (X16), PAC (X17), EDTA (X18) and aqueous solution of anionic polyelectrolyte (X19) of high molecular weight.

Then the liquid from the buffer tank (B3) is fed to the buffer tank (B4) overflowing, which is a sedimentation tank of suitable dimensions and with a cone at the bottom, so that the residence time in it is at least two (2) hours . From the buffer tank (B4), the settling sludge is fed by a transfer pump to a buffer tank (B5) and from there it is fed to the filter press (F2).

Through this process, the solid final Copper product (FPCu2) is obtained, in the form of an organic complex, which has bound the Copper oxide, while the liquid leachates (SYPE) are sent to the installation's WWTP. The solid copper product is collected in bins.

The chemicals that are been used to this process are:

### Metal separation stage

Aqueous solution NH₃ < 25%, (NH4)₂CO₃, (NH4)₂SO₄, Deionized water, tap water, NaOH 50%, Sodium Aluminate, Metasulfonic Acid

### Metal production stage

Methyl isobutyl carbinol, SDS, SDD, Ethanol, Methanol, NaOH 50%, EDTA, Sodium dimethyldithiocarbumate, PAC, aqueous solution of anionic polyelectrolyte of high molecular weight.

### Application example

In this example, Copper Oil Sludge treatment was carried out, in order to recover Copper. In this particular application, one thousand kilograms (1,000 kg) of Copper dust were treated, using ten cubic meters (10 m³) of initial treatment solution. The table below shows a typical composition of the specific material to be treated as well as the process and consumption of chemicals during application.

**Table 1: Chemical analyses of Copper Oil Sludge (ND = Non Detectable)**

| **Element (unit)** | **Result** | **Measurement method** |
|---|---|---|
| Water with distillation (%v/w) | 2,40 | ASTM D-95 |
| Ash (% κ.β) | 81,00 | ASTM D-482 |
| Asphaltene (% κ.β) | 0,34 | IP 143 mod. |
| Sulfur (% κ.β) | < 0,10 | IP 242 mod. |
| Aluminum (mgAl/kg) | < 100,00 | ISO 10478 mod. |
| Copper (% κ.β.) | 60,00 | IH-05. MET. AAS |
| Zinc (mgZn/kg) | 145,00 | IH-05. MET. AAS |
| Lead (%κ.β.) | 0,65 | IH-05. MET. AAS |
| Kασσíτερo 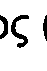 (mgSn/kg) | 465,00 | IH-05. MET. AAS |
| Chromium (mgCr/kg) | 9,00 | IH-05. MET. AAS |
| Nikel (mgNi/kg) | 215,00 | IH-05. MET. AAS |
| Πuρíτ 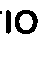 o (mgSi/kg) | 1.300 | ISO 10478 mod. |
| Aσβέστ 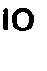 o (% κ.β.) | 0,18 | IH-05. MET. AAS |
| Iron (% κ.β.) | 0,70 | IH-05. MET. AAS |
| Megnesium (mgMg/kg) | 800,00 | IH-05. MET. AAS |
| Phosphorous (mgP/kg) | 465,00 | ASTM D-1091 mod. |
| Manganese (mgMn/kg) | 152,00 | IH-05. MET. AAS |
| Molybdenum (mgMo/kg) | 22,00 | IH-05. MET. AAS |

### Metal separation stage:

Praparation stage - inactivation reactor. For the treatment of a thousand kilograms (1.000 kg) of Copper Oil Sludge, there are used 300,00 kg of Geopolymer material, 20,00lt of Iron Trichloride and 14,00lt H₂O₂.

Activated dissolver production. For the production of one cubic meter (1,00 m³) of activated dissolver are used 550 It of deionized water, 450 It of aqueous solution NH₃ 25,00%, 26,00 kg of (NH₄)₂SO₄ and 46,00 kg of (NH₄)₂CO₃.

During the application, the solid/liquid ratio is 1/10. The quantities of the consumables that they are used for the treatment of one thousand kilograms (1.000 kg) of Copper Oil Sludge are the following: 9,000 It tap water, 1.000 It activated dissolver, 15,00 It NaOH 50%, 3,00 It Sodium Aluminum, 0,10 It Metasulfonic acid.

### Metal production stage - mixing and chemical flotation

In this stage, for the separation of the metals the following consumables are used: 2,00 It Sodium dimethyl dithiocarbonate (SDD), 4,00 kg SDS, 0,80lt Methyl isobutyl carbinol, 2,00lt Ethanol. SDS is used only in case that, from the initial chemical analyses of the raw material shows, the Copper concentration is higher than 40.00%. In case that primary Copper concentration is below 40.00%, SDS is not used.

### Copper production stage - chemical crystallization

In this stage, for the treatment of the separated foam, and the production of CuO/Cu(OH)₂, the following consumables are used: 10.000,00 It Methanol, 15,00 It NaOH 50% solution, 0,50lt EDTA. These consumptions are for a Methanol quantity of 10,00 m³.

### Copper production stage - Chemical precipitation

In this stage, for the treatment of the liquid, after foam separation, during floatation, and the production of CuO/Cu(OH)₂ the following consumables are used: 25,00lt Sodium dimethyldithiocarbamate, 3,00lt Methyl Isobutyl Carbinol, 0,50lt EDTA, 12,00lt PAC, 50,00lt of aqueous solution of anionic polyelectrolyte of high molecular weight, with concentration 2,00%.

### Explanation of the results of the application

In this application , Copper concentration in the raw material, as it is shown to the chemical analyses is 600,00 kgr/tn of raw material. The Copper production quantity is 570,00 kgr/tn of raw material.

The Copper production - recovery percentage as shown to the following table:

**Table 2: Efficiency of the application**

| **Metal** | **Initial concentration (kgr/tn)** | **Production (kgr/tn of raw material)** | **Efficiency (%)** |
|---|---|---|---|
| **Copper** | 600,00 | 570,00 | 95,00% |

From the above, it can be seen that the specific method is technically and economically efficient as the performance in the production of metals is very high, in the specific materials.

## Claims

1. Method of hydrometallurgical production - recovery of Copper, with the application of chemical neutralization, chemical dissolution, chemical flotation, chemical crystallization and chemical precipitation, using new chemical solutions and geopolymer materials, from secondary residues, belonging to the Copper Oil Sludge category or similar secondary residues, rich in Copper.

2. Method of hydrometallurgical production - recovery of Copper, from secondary residues, belonging to the Copper Oil Sludge category or similar secondary residues, rich in Copper, according to claim 1, where in the pre-treatment stage, the following reagents are used in the neutralization reactor: Geopolymer material consisting of Zeolite (30,00%), Huntite (5,00%), Calcium Carbonate (35,00%), Bentonite (20,00%), Kaolin (7,00%), Potassium Hydroxide (2,00%) and Sodium Hydroxide (1,00%), Iron Trichloride and Hydrogen Peroxide.

3. Method of hydrometallurgical production - recovery of Copper, from secondary residues, belonging to the Copper Oil Sludge category or similar secondary residues, rich in Copper, according to claim 1, where in the stage of chemical dissolution in the reactor the following reagents are used: Deionized water, Tap water, (NH₄)2SO₄, (NH₄)CO₃, aqueous solution NH₃ 25%, NaOH 50%, Sodium aluminate and Metasulfonic acid.

4. Method of hydrometallurgical production - recovery of Copper, from secondary residues, which belong to the Copper Oil Sludge category or similar secondary residues, rich in Copper, according to claim 1, where in the stage of chemical flotation in the mixing and flotation vessels the following are used reagents: Sodium Dimethyl Dithicarbonate, SDS, Methyl isobutyl carbinol and Ethanol.

5. Method of hydrometallurgical production - recovery of Copper, from secondary residues, belonging to the Copper Oil Sludge category or similar secondary residues, rich in Copper, according to claim 1, where the following reagents are used in the chemical crystallization stage: Methanol, NaOH 50% and EDTA.

6. Method of hydrometallurgical production - recovery of Copper, from secondary residues, belonging to the Copper Oil Sludge category or similar secondary residues, rich in Copper, according to claim 1, where the following reagents are used in the chemical precipitation stage: Sodium Isobutyl Carbinol, EDTA, Sodium dimethyldithiocarbumate, PAC, solution of anionic polyelectrolyte of high molecular weight.

7. Method of hydrometallurgical production - recovery of Copper, from secondary residues, belonging to the Copper Oil Sludge category or similar secondary residues, rich in Copper, according to claim 1, 2, 3, 4, 5 and 6, where the application of includes the following stages: pretreatment - chemical neutralization, metal separation - chemical dissolution, metal production - mixing and chemical flotation, copper production - chemical crystallization and copper production - chemical precipitation,
